# EUROPEAN PATENT SPECIFICATION

(11) **EP 4 517 112 B1**
(45) Date of publication and mention of the grant of the patent: **22.07.2026**
(21) Application number: 24196747.0
(22) Date of filing: 27.08.2024
(51) Int. Cl.: F16B 2/08, F16B 21/09, F16B 3/00, F16B 35/00, F16B 37/00

(54) **SIZE-ADJUSTABLE FASTENER**
GRÖSSENVERSTELLBARER BEFESTIGER
DISPOSITIF DE FIXATION A TAILLE AJUSTABLE

(30) Priority: 29.08.2023 CN 202322324444 U
(43) Date of publication of application: 05.03.2025
(73) Proprietor: DongGuan Meiluodi Electronics Co.,Ltd, Chang an, Dongguan, Guangdong 523876 (CN)
(72) Inventor: Fang, Songke, Chang an, Dongguan (CN)
(74) Representative: Zuazo Araluze, Alexander

(56) References cited:
- CH-A5- 679 178
- FR-A5- 2 211 060
- US-A1- 2018 177 660

## Description

### TECHNICAL FIELD

The present disclosure relates to the field of connection structures, and in particular to a size-adjustable fastener.

### BACKGROUND

In daily life or outdoor activities, carry-on objects (a bottle, a bag, and so on) may usually need to be fixed to other structures. For example, when camping, a camping light may need to be fixed to a camping pole; when riding, a bottle needs to be fixed to a seat post of a bicycle, and a bag needs to be fixed to a handlebar of the bicycle. The above fixing is achieved by a fastener. In the following, fixing the bag to the handlebar of the bicycle will be described as an example.

A bicycle fastener in the art is a ring-shaped structure sleeving the handlebar. A diameter of a through hole on the ring-shaped structure is not adjustable. For example, a patent, having an application No. 202222458753.X, discloses a fastener connection structure for an outdoor bag and a bicycle handlebar. The fastener connection structure includes a bag body, a fastener member and a fixed plate fixed at a front end of the bag body. A bottom of the fixed plate is fixed with an insertion-connection member. A top of the insertion-connection defines an opening. The opening gradually decreases along a direction extending from an outside to an inside. The insertion-connection member defines an opened limiting groove communicating with the opening. The fastener member includes a limiting slider, two first fixing rings and two second fixing rings. The limiting slider is slidably arranged in the opened limiting groove. The insertion-connection member is located at a middle of the opening and defines a square limiting groove. A bottom of the limiting slider is provided with a limiting assembly corresponding to the square limiting groove. The two first fixing rings are both fixed on the limiting slider. An end of the second fixing ring is hinged to a bottom of the first fixing ring. A top of the first fixing ring defines a through hole. A top of the second fixing ring defines a thread hole mating with the through hole. A fixing bolt is fixedly threaded inside the threaded hole. In the above patent, a circular through hole is defined cooperatively by the first fixing ring and the second fixing ring. The bicycle handlebar passes through the circular through hole. The first fixing ring and the second fixing ring cooperatively clamp the bicycle handlebar. The first fixing ring and the second fixing ring are connected to each other via fixing screws. In the above patent, although the fastener member is mounted on the bicycle handlebar, a diameter of the fastener member mounted on the bicycle handlebar is not adjustable. When the diameter of the bicycle handlebar is larger than the diameter of the through hole, the first fixing ring and the second fixing ring cannot sleeve the bicycle handlebar, and therefore, the fastener connection structure cannot be mounted to the bicycle handlebar. When the diameter of the bicycle handlebar is smaller than the diameter of the through hole, the first fixing ring and the second fixing ring sleeve the bicycle handlebar, however, the first fixing ring and the second fixing ring cannot be tightly fastened to the bicycle handlebar. When riding the bicycle, the bicycle may bump, resulting in the first fixing ring and the second fixing ring rotating around the bicycle handlebar and colliding with other structures of the bicycle.

Patent document CH 679178 A5 discloses a size-adjustable fastener comprising the features of the preamble of claim 1.

Patent document FR 2211060 A5 discloses a size-adjustable fastener in which the ends are connected by means of a bolt.

### SUMMARY OF THE DISCLOSURE

The present disclosure provides a size-adjustable fastener to solve a technical problem that a size of the fastener is not adjustable.

The present disclosure provides a size-adjustable fastener, including: a first fastener and a second fastener. The first fastener is arranged with a plurality of connection strips; an end of each of the plurality of connection strips is arranged with a limiting block; a transverse cross section of the limiting block is larger than that of the connection strip; the second fastener defines a plurality of connection holes; each of the plurality of connection holes is communicated with a limiting hole, and the limiting hole is located at a side of the respective connection hole; the connection strip is inserted into the connection hole from a side of the second fastener; the connection strip is moved to approach the limiting hole to enable the limiting block to abut against the other side of the second fastener, enabling an end of the second fastener is connected to an end of the first fastener. The other end of the second fastener is connected to the other end of the first fastener.

In some embodiments, two ends of a side of the connection strip defines two limiting grooves, respectively; a length of the limiting hole is smaller than a length of the connection hole; two limiting projections are formed at connections between the connection hole and the limiting hole; when the connection strip is moved to approach the limiting hole, the two limiting projections are respectively snapped into the two limiting grooves.

In some embodiments, a side of the limiting block facing the limiting slots horizontally protrudes out of the side of the connection strip.

In some embodiments, the number of the plurality of connection strips is at least three, and the number of the plurality of connection holes is more than the number of the plurality of connection strips.

According to the invention, the other end of the second fastener is arranged with a bolt, and the other end of the first fastener is arranged with a fastening nut; the bolt is screwed tightly with the fastening nut to enable the other end of the second fastener to be connected to the other end of the first fastener.

An auxiliary hole is defined between the plurality of connection holes and the bolt; and the end of the second fastener away from the bolt passes through the auxiliary hole.

In some embodiments, the second fastener defines a bolt hole; the bolt extends through the bolt hole; the fastening nut defines a screw hole; the bolt is screwed into the screw hole, enabling the other end of the first fastener to be connected to the other end of the second fastener.

In some embodiments, the bolt hole is communicated with a receiving slot, the receiving slot is configured to receive a head of the bolt.

In some embodiments, the first fastener defines a nut hole, an inner wall of the nut hole is arranged with internal threads, the fastening nut is arranged with external threads, the nut is mounted in the nut hole by threading the external threads with the internal threads.

According to the present disclosure, a size-adjustable fastener is provided and includes a first fastener and a second fastener. An end of the second fastener is connected to an end of the first fastener. The second fastener defines a plurality of connection holes. A connection strip on the first fastener selectively passes through any one of the plurality of connection holes, and therefore, a diameter of a through hole defined by the second fastener and the first fastener is adjustable. In addition, the connection strip is limited in the connection hole by a limiting block. In this way, connection between the end of the second fastener and the end of the first fastener is achieved. In the present disclosure, a simple structure is configured to enable the diameter of the through hole to be adjustable. The size-adjustable fastener in the present disclosure is highly practical and has low production costs.

### BRIEF DESCRIPTION OF THE DRAWINGS

FIG. 1 is a first structural schematic view of a size-adjustable fastener according to an embodiment of the present disclosure.
FIG. 2 is a second structural schematic view of the size-adjustable fastener according to an embodiment of the present disclosure.
FIG. 3 is a structural schematic view of a first fastener according to an embodiment of the present disclosure.
FIG. 4 is a bottom view of the first fastener according to an embodiment of the present disclosure.
FIG. 5 is a cross-sectional view of the first fastener shown in FIG. 4, taken along a line A-A.
FIG. 6 is a structural schematic view of a second fastener according to an embodiment of the present disclosure.
FIG. 7 is a structural schematic view of the size-adjustable fastener in a bent state according to an embodiment of the present disclosure.
FIG. 8 is a structural schematic view I of the size-adjustable fastener in a mounted state according to an embodiment of the present disclosure.
FIG. 9 is a structural schematic view II of the size-adjustable fastener in the mounted state according to an embodiment of the present disclosure.

Reference numerals in the drawings: 100, first fastener; 110, connection strip; 111, limiting groove; 120, limiting block; 130, fastening nut; 131, screw hole; 140, nut hole; 200, second fastener; 210, connection hole; 220, limiting hole; 230, limiting projection; 240, bolt; 250, auxiliary hole; 260, bolt hole; 270, receiving slot.

### DETAILED DESCRIPTION

In order to make the purpose, technical solutions and advantages of the embodiments of the present disclosure clearer, the technical solutions in the embodiments of the present disclosure will be described clearly and completely in the following by referring to the accompanying drawings in the embodiments of the present disclosure. Obviously, the described embodiments are a part of, not all of, the embodiments of the present disclosure. All other embodiments, which are obtained by any ordinary skilled person in the art based on the embodiments in the present disclosure without making creative work, shall fall within the scope of the present disclosure.

The present disclosure provides a fastener configured to fasten a carry-on object to a strip-shaped structure. The carry-on object includes, but is not limited to, a bottle and a bag. The strip-shaped structure includes, but is not limited to, a seat post of a bicycle and a bicycle handlebar.

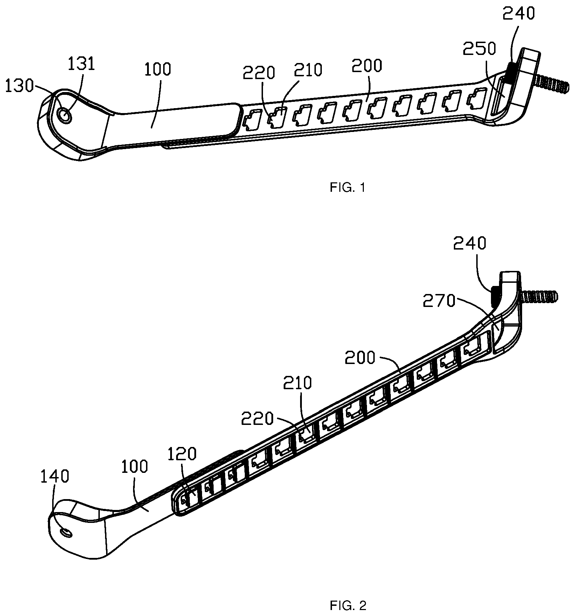

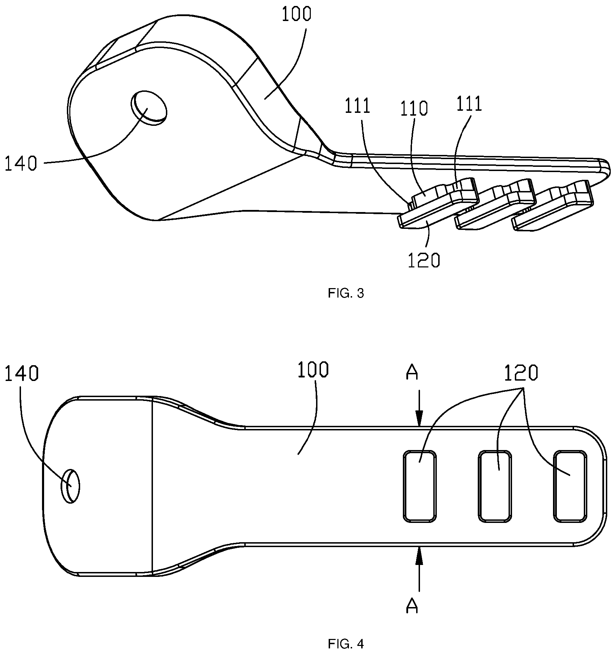

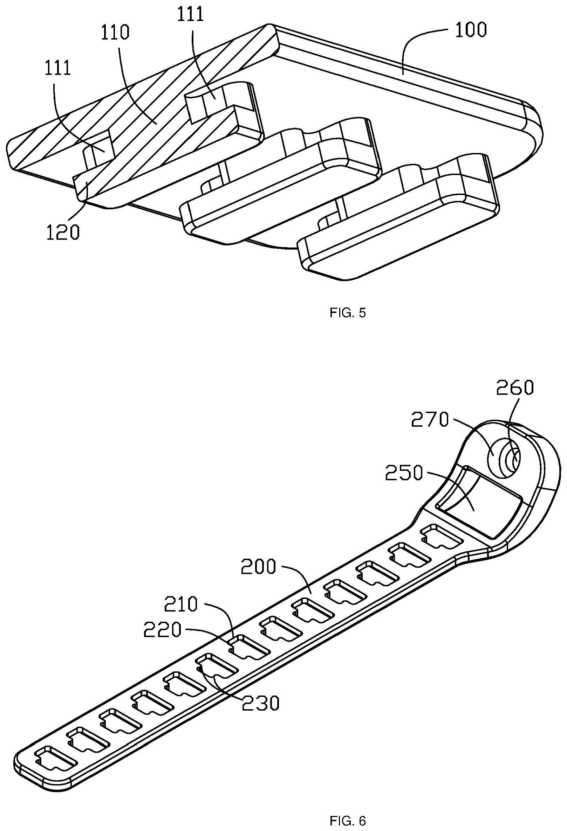

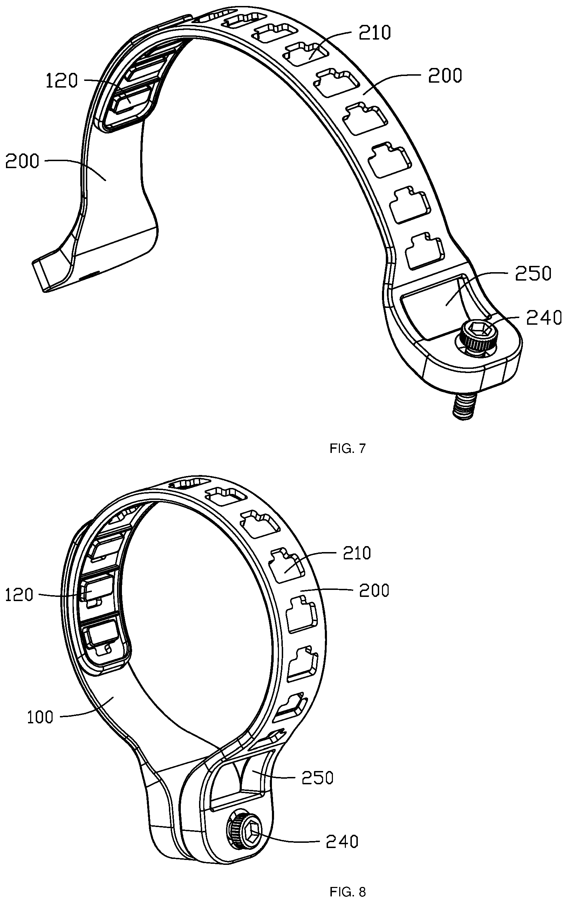

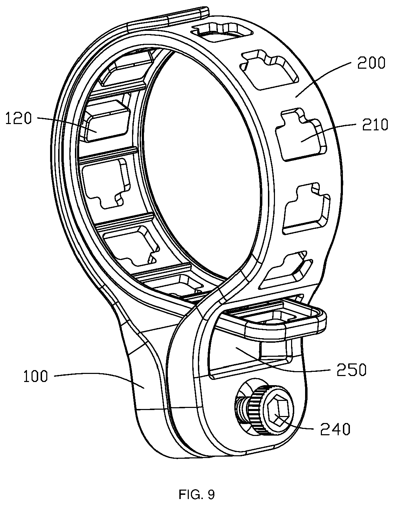

As shown in FIGS. 1-FIG. 9, a size-adjustable fastener is provided and includes a first fastener 100 and a second fastener 200. The first fastener 100 and the second fastener 200 are both elongated, thin, and bendable. Specifically, the first fastener 100 and the second fastener 200 enclose, under an external force, with each other to form an annular structure having a through hole. The through hole is configured to allow the strip-shaped structure to pass through. That is, the first fastener 100 and the second fastener 200 sleeve the strip-shaped structure.

The first fastener 100 is arranged with a plurality of connection strips 110. An end of each connection strip 110 is arranged with a limiting block 120. A transverse cross section of the limiting block 120 is larger than that of the connection strip 110. The second fastener 200 defines a plurality of connection holes 210. Each connection hole 210 is communicated with a limiting hole 220, and the limiting hole 220 is located at a side of the connection hole 210. The connection strip 110 is inserted into the connection hole 210 from a side of the second fastener 200. In addition, the connection strip 110 is moved to approach the limiting hole 220 to enable the limiting block 120 to abut against the other side of the second fastener 200. In this way, the end of the second fastener 200 is connected to the end of the first fastener 100. The other end of the second fastener 200 away from the plurality of connection holes 210 is connected to the other end of the first fastener 100 away from the plurality of connection strips 110. Since the plurality of connection holes 210 are defined, when the first fastener 100 and the second fastener 200 surround the strip-shaped structure, and the connection strip 110 can be inserted into a proper one of the plurality of connection holes 210 based on a diameter of the strip-shaped structure. In this way, the first fastener 100 and the second fastener 200 can be tightly fastened on the strip-shaped structure, and therefore, a diameter of the through hole defined by the first fastener 100 and the second fastener 200 is adjustable. In addition, due to a force that the strip-shaped structure applied on the first fastener 100 and the second fastener 200, the connection strip 110 is enabled to be disposed close to the limiting hole 220 (for example, eventually, the force enables at least a portion of the connection strip 110 to be received in the limiting hole 220). Therefore, the limiting block 120 abuts against the other side of the second fastener 200. The limiting block 120 prevents the connection strip 110 from sliding out of the connection hole 210, such that the end of the first fastener 100 is connected to the end of the second fastener 200. In the present disclosure, a simple structure is configured to allow the diameter of the through hole to be adjustable, and therefore, the size-adjustable fastener in the present disclosure is highly practical and has low production costs.

In the present embodiment, two ends of a side of the connection strip 110 defines two limiting grooves 111, respectively. A length of the limiting hole 220 is smaller than a length of the connection hole 210 (the length refers to a size of the limiting hole or the connection hole in a direction perpendicular to a length direction of the second fastener 200). Two limiting projections 230 are formed at connections between the connection hole 210 and the limiting hole 220. When the first fastener 100 and the second fastener 200 surround and are fastened to the strip-shaped structure based on the diameter of the strip-shaped structure, due to an outward reaction force that the strip-shaped structure applies on the first fastener 100 and the second fastener 200, the first fastener 100 and the second fastener 200 are moved away from each other to enable the connection strip 110 to approach the limiting hole 220, enabling the two limiting projections 230 to be respectively snapped into the two limiting grooves 111. That is, an area that the limiting block 120 abuts against the other side of the first fastener 100 is increased. In this way, the connection strip 110 is further prevented from being disengaged out of the connection hole 210.

In the present embodiment, a side of the limiting block 120 facing the limiting slots 111 horizontally protrudes out of the side of the connection strip 110. A protruded portion of the limiting block 120 is configured to abut against the other side of the second fastener 200, preventing the connection strip 110 from slipping out of the connection hole 210.

In the present embodiment, at least three connection strips 110 are arranged. The number of the plurality of connection holes 210 is more than the number of the connection strips 110. Three of the at least three connection strips 110 are respectively inserted into three of the plurality of connection holes 210. Arranging three connection strips 110 allows the first fastener 100 and the second fastener 200 to be more securely connected to each other, and the first fastener 100 and the second fastener 200 are less likely to be detached from each other.

In the present embodiment, the other end of the second fastener 200 is arranged with a bolt 240, and the other end of the first fastener 100 is arranged with a fastening nut 130. The bolt 240 is screwed tightly with the fastening nut 130 to enable the other end of the second fastener 200 to be connected to the other end of the first fastener 100. In this way, detachable connection between the first fastener 100 and the second fastener 200 is achieved, and detaching can be performed easily.

In the present embodiment, an auxiliary hole 250 is defined between the connection hole 210 and the bolt 240, and the end of the second fastener 200 away from the bolt 240 passes through the auxiliary hole 250. When the first fastener 100 and the second fastener 200 enclose with each other to form an annular structure having a relatively small diameter, the end of the second fastener 200 extends around for one loop to pass through the auxiliary hole 250 (i.e., the end of the second fastener 200 extends into the auxiliary hole 250 from the other side of the second fastener 200). In this way, an aesthetical structure is achieved.

In the present embodiment, the second fastener 200 defines a bolt hole 260. The bolt 240 extends through the bolt hole 260. The fastening nut 130 defines a screw hole 131. The bolt 240 is screwed into the screw hole 131. In this way, the other end of the first fastener 100 is enabled to be connected to the other end of the second fastener 200. That is, the bolt 240 passes through the bolt hole 260 and the screw hole 131 sequentially to connect the other end of the second fastener 200 to the other end of the first fastener 100.

In the present embodiment, the bolt hole 260 is communicated with a receiving slot 270. The receiving slot 270 is configured to receive a head of the bolt 240. When the bolt 240 passes through the bolt hole 260, the head of the bolt 240 is received in the receiving slot 270. In this way, an outer surface of the head of the bolt 240 flushes with a surface of the second fastener 200. An aesthetical structure is achieved.

In the present embodiment, the first fastener 100 defines a nut hole 140. An inner wall of the nut hole 140 is arranged with internal threads. The fastening nut 130 is arranged with external threads. The nut is mounted in the nut hole 140 by threading the external threads with the internal threads. Since the fastening nut 130 is tightly fastened in the nut hole 140 and connection there between is achieved by the external threads being threaded with the internal threads, the fastening nut 130 does not rotate when the bolt 240 is screwed into the fastening nut 130.

The above description shows only embodiments of the present disclosure to enable a person skilled in the art to understand and carry out the invention. Accordingly, the present disclosure is not limited to these embodiments shown herein but is to be interpreted within the scope defined by the appended claims.

## Claims

1. A size-adjustable fastener, comprising: a first fastener (100) and a second fastener (200);
wherein, the first fastener (100) is arranged with a plurality of connection strips (110); an end of each of the plurality of connection strips (110) is arranged with a limiting block (120); a transverse cross section of the limiting block (120) is larger than that of the connection strip (110); the second fastener (200) defines a plurality of connection holes (210); each of the plurality of connection holes (210) is communicated with a limiting hole (220), and the limiting hole (220) is located at a side of the respective connection hole (210); the connection strip (110) is inserted into the connection hole (210) from a side of the second fastener (200); the connection strip (110) is moved to approach the limiting hole (220) to enable the limiting block (120) to abut against the other side of the second fastener (200), enabling an end of the second fastener (200) to be connected to an end of the first fastener (100); and the other end of the second fastener (200) is connected to the other end of the first fastener (100);
**characterized in that**,
the other end of the second fastener (200) is arranged with a bolt (240), and the other end of the first fastener (100) is arranged with a fastening nut (130); the bolt (240) is screwed tightly with the fastening nut (130) to enable the other end of the second fastener (200) to be connected to the other end of the first fastener (100); and
an auxiliary hole (250) is defined between the plurality of connection holes (210) and the bolt (240); and the end of the second fastener (200) away from the bolt (240) passes through the auxiliary hole (250).

2. The size-adjustable fastener according to claim 1, wherein, two ends of a side of the connection strip (110) defines two limiting grooves (111), respectively; a length of the limiting hole (220) is smaller than a length of the connection hole (210); two limiting projections (230) are formed at connections between the connection hole (210) and the limiting hole (220); when the connection strip (110) is moved to approach the limiting hole (220), the two limiting projections (230) are respectively snapped into the two limiting grooves (111).

3. The size-adjustable fastener according to claim 2, wherein, a side of the limiting block (120) facing the limiting slots horizontally protrudes out of the side of the connection strip (110).

4. The size-adjustable fastener according to claim 1, wherein, the number of the plurality of connection strips (110) is at least three, and the number of the plurality of connection holes (210) is more than the number of the plurality of connection strips (110).

5. The size-adjustable fastener according to claim 1, wherein, the second fastener (200) defines a bolt hole (260); the bolt (240) extends through the bolt hole (260); the fastening nut (130) defines a screw hole (131); the bolt (240) is screwed into the screw hole (131), enabling the other end of the first fastener (100) to be connected to the other end of the second fastener (200).

6. The size-adjustable fastener according to claim 5, wherein, the bolt hole (260) is communicated with a receiving slot (270), the receiving slot (270) is configured to receive a head of the bolt (240).

7. The size-adjustable fastener according to claim 1, wherein, the first fastener (100) defines a nut hole (140), an inner wall of the nut hole (140) is arranged with internal threads, the fastening nut (130) is arranged with external threads, the nut (130) is mounted in the nut hole (140) by threading the external threads with the internal threads.

## Patentansprüche

1. Größenverstellbare Befestigungsvorrichtung, umfassend ein erstes Befestigungselement (100) und ein zweites Befestigungselement (200), wobei das erste Befestigungselement (100) mit einer Mehrzahl von Verbindungsstegen (110) versehen ist, wobei ein Endabschnitt jedes Verbindungsstegs (110) einen Rastblock (120) aufweist, wobei der Querschnitt des Verbindungsstegs (110) kleiner ist als der Querschnitt des Rastblocks (120), wobei das zweite Befestigungselement (200) eine Mehrzahl von Verbindungsöffnungen (210) aufweist, wobei jede Verbindungsöffnung (210) mit einer Rastöffnung (220) in Verbindung steht und die Rastöffnung (220) an einer Seite der jeweiligen Verbindungsöffnung (210) angeordnet ist, wobei der Verbindungssteg (110) von einer Seite des zweiten Befestigungselements (200) in die Verbindungsöffnung (210) eingeführt wird, wobei der Verbindungssteg (110) in Richtung der Rastöffnung (220) bewegt wird, sodass der Rastblock (120) an einer gegenüberliegenden Seite des zweiten Befestigungselements (200) anliegt, wodurch ein erstes Ende des zweiten Befestigungselements (200) mit einem ersten Ende des ersten Befestigungselements (100) verbunden wird und ein zweites Ende des zweiten Befestigungselements (200) mit einem zweiten Ende des ersten Befestigungselements (100) verbunden wird,**dadurch gekennzeichnet, dass** das zweite Ende des zweiten Befestigungselements (200) einen Schraubenbolzen (240) aufweist, das zweite Ende des ersten Befestigungselements (100) eine Befestigungsmutter (130) aufweist, der Schraubenbolzen (240) mit der Befestigungsmutter (130) verschraubbar ist, um das zweite Ende des zweiten Befestigungselements (200) mit dem zweiten Ende des ersten Befestigungselements (100) zu verbinden, und zwischen der Mehrzahl von Verbindungsöffnungen (210) und dem Schraubenbolzen (240) eine Durchführungsöffnung (250) vorgesehen ist, wobei das vom Schraubenbolzen (240) entfernte Ende des zweiten Befestigungselements (200) durch die Durchführungsöffnung (250) hindurchgeführt ist.

2. Befestigungsvorrichtung nach Anspruch 1, wobei an beiden Enden einer Seite des Verbindungsstegs (110) jeweils eine Rastnut (111) ausgebildet ist, die Länge der Rastöffnung (220) kleiner als die Länge der Verbindungsöffnung (210) ist und zwischen der Verbindungsöffnung (210) und der Rastöffnung (220) zwei Rastvorsprünge (230) ausgebildet sind, welche beim Bewegen des Verbindungsstegs (110) in Richtung der Rastöffnung (220) jeweils in die Rastnuten (111) eingreifen.

3. Befestigungsvorrichtung nach Anspruch 2, wobei der Rastblock (120) auf der den Rastnuten zugewandten Seite seitlich über den Verbindungssteg (110) vorsteht.

4. Befestigungsvorrichtung nach Anspruch 1, wobei die Anzahl der Verbindungsstege (110) mindestens drei beträgt und die Anzahl der Verbindungsöffnungen (210) größer ist als die Anzahl der Verbindungsstege (110).

5. Befestigungsvorrichtung nach Anspruch 1, wobei das zweite Befestigungselement (200) eine Schraubenöffnung (260) aufweist, der Schraubenbolzen (240) durch die Schraubenöffnung (260) hindurchgeführt ist, die Befestigungsmutter (130) eine Gewindeöffnung (131) aufweist und der Schraubenbolzen (240) in die Gewindeöffnung (131) eingeschraubt ist, sodass das zweite Ende des ersten Befestigungselements (100) mit dem zweiten Ende des zweiten Befestigungselements (200) verbunden wird.

6. Befestigungsvorrichtung nach Anspruch 5, wobei die Schraubenöffnung (260) mit einer Aufnahmeausnehmung (270) verbunden ist, welche zur Aufnahme des Kopfes des Schraubenbolzens (240) ausgebildet ist.

7. Befestigungsvorrichtung nach Anspruch 1, wobei das erste Befestigungselement (100) eine Mutteröffnung (140) aufweist, deren Innenwand mit einem Innengewinde versehen ist, die Befestigungsmutter (130) ein Außengewinde aufweist und durch Verschrauben des Außengewindes mit dem Innengewinde in der Mutteröffnung (140) befestigt ist.

## Revendications

1. Dispositif de fixation réglable en taille, comprenant : un premier élément de fixation (100) et un second élément de fixation (200) ;
dans lequel le premier élément de fixation (100) est pourvu d'une pluralité de bandes de connexion (110) ; une extrémité de chacune desdites bandes de connexion (110) est munie d'un bloc de limitation (120) ; une section transversale de la bande de connexion (110) est inférieure à celle du bloc de limitation (120) ; le second élément de fixation (200) définit une pluralité de trous de connexion (210) ; chacun des trous de connexion (210) communique avec un trou de limitation (220), et le trou de limitation (220) est situé sur un côté du trou de connexion (210) correspondant ; la bande de connexion (110) est insérée dans le trou de connexion (210) depuis un côté du second élément de fixation (200) ; la bande de connexion (110) est déplacée pour s'approcher du trou de limitation (220), de sorte que le bloc de limitation (120) vienne en butée contre l'autre côté du second élément de fixation (200), permettant ainsi à une extrémité du second élément de fixation (200) d'être reliée à une extrémité du premier élément de fixation (100), et à l'autre extrémité du second élément de fixation (200) d'être reliée à l'autre extrémité du premier élément de fixation (100) ;
**caractérisé en ce que** :
l'autre extrémité du second élément de fixation (200) est munie d'un boulon (240), et l'autre extrémité du premier élément de fixation (100) est munie d'un écrou de fixation (130) ; le boulon (240) est vissé fermement avec l'écrou de fixation (130), afin de permettre à l'autre extrémité du second élément de fixation (200) d'être reliée à l'autre extrémité du premier élément de fixation (100) ; et
un trou auxiliaire (250) est défini entre la pluralité de trous de connexion (210) et le boulon (240) ; et l'extrémité du second élément de fixation (200) éloignée du boulon (240) passe à travers le trou auxiliaire (250).

2. Dispositif de fixation réglable en taille selon la revendication 1, dans lequel deux extrémités d'un côté de la bande de connexion (110) définissent respectivement deux rainures de limitation (111) ; une longueur du trou de limitation (220) est inférieure à une longueur du trou de connexion (210) ; deux saillies de limitation (230) sont formées au niveau d'une jonction entre le trou de connexion (210) et le trou de limitation (220) ; lorsque la bande de connexion (110) est déplacée pour s'approcher du trou de limitation (220), les deux saillies de limitation (230) s'enclenchent respectivement dans les deux rainures de limitation (111).

3. Dispositif de fixation réglable en taille selon la revendication 2, dans lequel un côté du bloc de limitation (120) faisant face aux rainures de limitation fait saillie horizontalement par rapport à un côté de la bande de connexion (110).

4. Dispositif de fixation réglable en taille selon la revendication 1, dans lequel le nombre de la pluralité de bandes de connexion (110) est d'au moins trois, et le nombre de la pluralité de trous de connexion (210) est supérieur au nombre de la pluralité de bandes de connexion (110).

5. Dispositif de fixation réglable en taille selon la revendication 1, dans lequel le second élément de fixation (200) définit un trou de boulon (260) ; le boulon (240) traverse le trou de boulon (260) ; l'écrou de fixation (130) définit un trou taraudé (131) ; le boulon (240) est vissé dans le trou taraudé (131), permettant ainsi à l'autre extrémité du premier élément de fixation (100) d'être reliée à l'autre extrémité du second élément de fixation (200).

6. Dispositif de fixation réglable en taille selon la revendication 5, dans lequel le trou de boulon (260) communique avec une fente de réception (270), la fente de réception (270) étant configurée pour recevoir une tête du boulon (240).

7. Dispositif de fixation réglable en taille selon la revendication 1, dans lequel le premier élément de fixation (100) définit un trou d'écrou (140), une paroi interne du trou d'écrou (140) étant pourvue de filetages internes ; l'écrou de fixation (130) est pourvu de filetages externes ; l'écrou de fixation (130) est monté dans le trou d'écrou (140) par vissage des filetages externes avec les filetages internes.
